**Europäisches Patentamt**

**European Patent Office**

**Office européen des brevets**

(19)

(11) Publication number : **0 143 583 B1**

# EUROPEAN PATENT SPECIFICATION

(12)

(45) Date of publication of patent specification :
31.08.94 Bulletin 94/35

(51) Int. Cl.⁵ : **G02B 6/28,** G02B 5/30, G01B 9/02, G02F 1/01

(21) Application number : 84307920.3

(22) Date of filing : 15.11.84

(54) Fiber optic modal coupler.

(30) Priority : 30.11.83 US 556305
30.11.83 US 556306

(43) Date of publication of application :
05.06.85 Bulletin 85/23

(45) Publication of the grant of the patent :
31.08.94 Bulletin 94/35

(84) Designated Contracting States :
AT BE CH DE FR GB IT LI LU NL SE

(56) References cited :
DE-A- 3 035 153
US-A- 4 342 907
FIBEROPTIC TECHNOLOGY, May 1983, pages
155-161; S.C. RASHLEIGH et al.:
"Preservation of polarization in single-mode
fibers"
APPLIED PHYSICS LETTERS, VOL. 29, NO. 8,
15 OCTOBER 1976, PP 485-487,
"DIRECTIONAL COUPLER FOR MULTIMODE
OPTICAL FIBERS" BY L. JEUNHOMME AND
J.P. POCHOLLE.

(73) Proprietor : THE BOARD OF TRUSTEES OF
THE LELAND STANFORD JUNIOR
UNIVERSITY
Encina 105
Stanford University
Stanford California 94305 (US)

(72) Inventor : Shaw, Herbert John
719 Alvarado Row
Stanford California 94305 (US)
Inventor : Youngquist, Robert C.
280 East Street
Apartment No. 505
Mountain View California 94043 (US)
Inventor : Brooks, Janet L.
928 Wright Avenue
Apartment No. 201
Mountain View California 94043 (US)

(74) Representative : Rushton, Ronald et al
SOMMERVILLE & RUSHTON
11 Holywell Hill
St. Albans Hertfordshire AL1 1EZ (GB)

## Description

Background of the Invention

The present invention relates generally to fiber optic directional couplers, and more specifically, to devices which selectively couple light energy between the propagation modes of an optical fiber. The transfer can be between fundamental and second order modes of a nonbirefringent fiber or between the polarization modes of a birefringent optical fiber.

Fiber optic directional couplers provide for the transfer of optical energy traveling in one fiber optic waveguide to another. Such couplers are useful for a variety of applications, e.g. in fiber optic sensors.

As is well known in the art, a single optical fiber may provide two or more waveguides under certain conditions. These waveguides are commonly referred to as the normal modes of a fiber, which may be conceptualized as independent optical paths through the fiber. Normal modes have unique electric field distribution patterns which remain unchanged, except for amplitude, as the light propagates through the fiber. Additionally, each normal mode will propagate through the fiber at a unique propagation velocity.

The number of modes that may be supported by a particular optical fiber is determined by the wavelength of the light propagating therethrough. The fiber has two modes of propagation, each having a different index of refraction so light propagating in one mode has a different propagation velocity than light propagating in the other mode. If the wavelength is greater than the "cutoff" wavelength, the fiber will support only a fundamental mode. If the wavelength is less than cutoff, the fiber will begin to support higher order modes. For wavelengths less than, but near, cutoff, the fiber will support only the fundamental, or first order mode, and the next, or second order mode. As the wavelength is decreased, the fiber will support additional modes, e.g. third order, fourth order, etc.

The normal modes are orthogonal; that is, there is no coupling between the light in these modes. In addition, each of the normal modes discussed above (i.e., fundamental, second order, etc.), includes two propagation modes, called orthogonal polarization modes, which are also normal modes. These polarization modes may be defined e.g. as the linear vertical polarization mode and the linear horizontal polarization mode. The orientation of the electric field vectors of the modes defines the polarization of the light in the mode, e.g., linear vertical, or linear horizontal. A more complete discussion of these modes, and their corresponding electric field patterns, will be provided below.

A directional coupler using induced mode conversion is disclosed in "Applied Physics Letters," volume 29, No. 8, 15 October 1976, pages 485-487. A multimode fiber is deformed under the pressure of two mechanically manufactured gratings. In a first embodiment, the coupler couples light between the fundamental mode and the radiated modes. This however requires a small value of the mechanical wavelength of the elastic deformation. Such gratings are difficult to manufacture and at this small mechanical wavelength the stiffness of the fiber would limit to very low values the achievable deformation, and hence, the amount of power transfer. In a second embodiment, larger mechanical wavelengths are used. In this case, only the guided modes close to cutoff are coupled directly to radiated modes while the guided modes far from cutoff are coupled to other guided modes closer to cutoff and so forth. The number of transitions needed to couple some power from the fundamental mode to the first radiated mode is about 28.

In US-A-4 342 907, there is described a stress sensor comprising a source system, a sensing system and a detecting system. Small deformations of the fiber used in the sensor causes significant amount of light to couple from the originally excited modes to other modes. The sensor can also originally excited modes to other modes. The sensor can also be used for measuring temperature, pressure and sound. A detector detects the change in light coupling caused by deformation of the fiber.

None of those references disclose the operation of the coupler in a single mode regime. Furthermore, the couplers described in those references do not couple light from a first mode to a second mode only in a two mode regime.

Accordingly, the invention provides a directional coupler according to Claim 1, and a method of coupling light as defined in Claim 8.

Each of the surfaces may have substantially abrupt edges to provide an abrupt shift in the longitudinal axis of the fiber. The width of each surface in the direction of the fiber axis may be approximately equal to an odd multiple of one half the fiber beat length and the spacing between adjacent surfaces in the direction of the fiber axis is approximately equal to an odd multiple of one half the fiber beat length.

The surfaces may be on a ridged block, and the support structure may comprise a flat plate. The coupler may also comprise a plurality of pins projecting from the support structure, and a plurality of holes in the ridged block, wherein the holes and the pins are correspondingly arranged so each of the pins is aligned with and fits into one of the holes, so the ridged block can be slid toward and away from the flat plate on the pins.

The coupler may also comprise a modulating driver for oscillating the surfaces relative to the support structure in accordance with a modulating signal to vary the stress applied to the fiber in the stressed regions. The number of stressed regions is preferably selected to cause preferential coupling of one polarisation relative to another polarisation.

Preferred embodiments of the invention will now be described, by way of example only, with reference to the accompanying drawings, in which:

Figure 1 is a schematic diagram illustrating the electric field patterns of the first and second order modes, $LP_{01}$ and $LP_{11}$, respectively, of a nonbirefringent fiber;

Figure 2 is an exploded, perspective view of the modal coupler;

Figure 3 is a cross sectional view, taken along the lines 3-3 of Figure 2, showing the shape of the ridges of a modal coupler;

Figure 4 is a schematic diagram showing a pair of ridges pressed against a nonbirefringent optical fiber so as to deform the fiber and cause abrupt changes in fiber geometry at the beinning and end of each ridge;

Figures 5(a) 5(f) show the electric field distribution relative to the fiber axis at various points along a stressed nonbirefringent optical fiber;

Figure 6 is a graph of coupled power versus wavelength, illustrating the polarisation dependence and wavelength independence of the coupler used with nonbirefringent fiber, as contrasted to conventional coupled mode theory;

Figure 7 is a schematic diagram showing the circuit arrangement utilised to test the performance of the coupler of the present invention as used with nonbirefringent fiber;

Figure 8 is a schematic diagram of a fiber optic polariser which utilises the modal coupler of the present invention with nonbirefringent fiber; and

Figure 9 is a schematic diagram of a single fiber Mach-Zehnder interferometer utilising a pair of modal couplers constructed in accordance with the present invention with nonbirefringent fiber.

## Detailed Desciption of the Preferred Embodiment

The coupler of the present invention uses a single strand of nonbirefringent single mode optical fiber operated at a wavelength below cutoff such that the fiber supports both fundamental and second order guided modes. Coherent coupling between orthogonal modes of the fiber is achieved by stressing the fiber at periodic intervals, e.g. once per beat length. The orthogonal modes provide two paths through the fiber which permit the device to be used as a two channel medium, e.g. as in in-line Mach-Zehnder interferometer, and as a two channel medium in data systems. The orthogonal modes are the fundamental and second order guided modes of the nonbirefringent fiber.

Before discussing the structural details and operational theory of the modal coupler of the present invention, a brief summary of mode theory will be presented, to provide background for more fully understanding the invention.

## Fiber Mode Theory

When a fiber propagates light at a wavelength below cutoff, the fiber will begin to guide higher order modes. The wavelength at cutoff ($\lambda_c$) is related to the fiber geometry, and may be calculated utilizing the following equation:

$$\lambda_c < \frac{2\pi r \sqrt{n_c^2 - n_{cl}^2}}{2.405} \quad (1)$$

where r is the core radius, $n_c$ is the refractive index of the core, and $n_{cl}$ is the refractive index of the cladding.

Those skilled in the art will recognize that the fundamental mode, second order mode, etc. each comprise plural electric field patterns, each of which represents a mode. For example, the fundamental mode includes two polarization modes. To avoid confusion, the fundamental mode will be referred to henceforth as the fundamental set of modes and the second order mode will be referred to as the second order set of modes.

The lowest order, or fundamental, set of modes which is guided is the $LP_{01}$ mode set. If the indices of the core and cladding are approximately equal, then it can be shown that the $LP_{11}$ mode set is the next mode set (i.e. the second order mode set), which is guided beyond the fundamental mode set $LP_{01}$. These mode sets are defined and described in detail in an article by D. Gloge, entitled "Weakly Guiding Fibers", Applied Optics, 10, 2252 (1971).

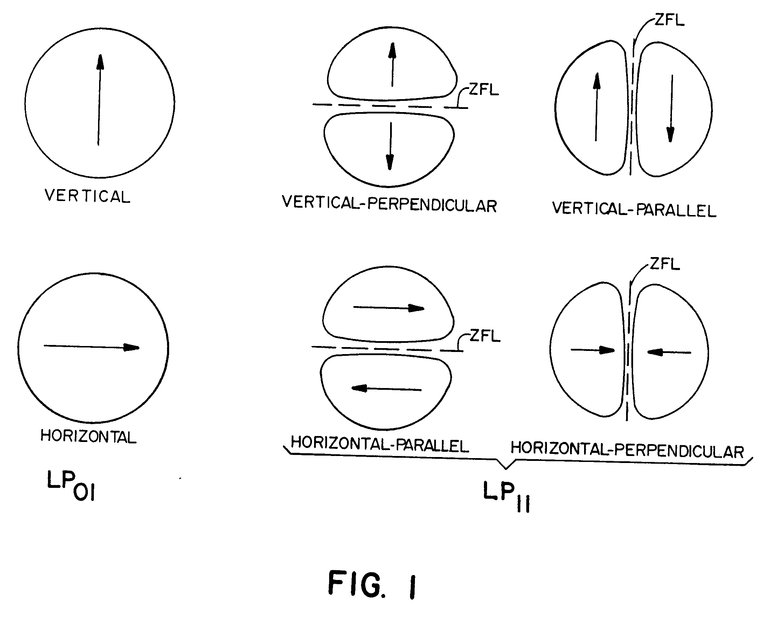

Figure 1 shows the field patterns of the two modes in the fundamental $LP_{01}$ set of modes and the four modes in the second order $LP_{11}$ set of modes. The arrows indicate the direction of the electric field vectors at a particular instant in time.

For the $LP_{01}$ set of fundamental modes, the electric field vector is either vertical, representing vertically polarized light or horizontal, representing horizontally polarized light. However, for the $LP_{11}$ set of second order modes, the vertical polarization and the horizontal polarization each have two electric field patterns. Further, each of the second order mode set field patterns comprises two lobes. In one of these field patterns, the electric field vectors of the lobes are perpendicular to the zero electric field line (ZFL), while in the other electric field pattern, the electric field vectors of the lobes are parallel to the zero electric field line (ZFL). The zero electric field line is simply a line between the two lobes in each of the second order mode patterns which represents zero electric field amplitude. Similarly, the horizontally polarized second order modes have electric field vectors oriented either parallel to the ZFL or perpendicular to the ZFL, as shown in Figure 1.

Each of the six electric field patterns in Figure 1, namely, the two $LP_{01}$ patterns and the four $LP_{11}$ patterns, are orthogonal to each other. Thus, the six patterns or modes may be viewed as independent optical paths through the fiber, which ordinarily do not couple with each other.

If the indices of the core and the cladding are approximately equal, the two $LP_{01}$ modes will travel through the fiber at approximately the same propagation velocity, and the four second order $LP_{11}$ modes will travel through the fiber at approximately the same propagation velocity. However, the propagation velocity for the fundamental $LP_{01}$ set of modes will be slower than the propagation velocity for the second order $LP_{11}$ set of modes. Thus, light traveling in the two set of modes $LP_{01}$, $LP_{11}$, will move in and out of phase with each other as the light propagates through the fiber. The rate at which the modes $LP_{01}$, $LP_{11}$ move in and out of phase depends on the difference in the effective refractive indices between the two sets of modes $LP_{01}$ and $LP_{11}$.

### Beat Length

The beat length of a fiber is the distance it takes two signals of the same frequency traveling in different propagation modes of the fiber at different velocities to shift 360° in relative phase so they are again in phase. Mathematically, the beat length is expressed as:

$$L = \frac{\lambda}{\Delta n} \quad (2)$$

where $\lambda$ is optical wave length in a vacuum and $\Delta n$ is the difference in the effective indices of two propagation modes of the fiber. With nonbirefringent fiber, $\Delta n$ is equal to the difference in effective refractive indices between the first order set of modes ($LP_{01}$) and the second order set of modes ($LP_{11}$).

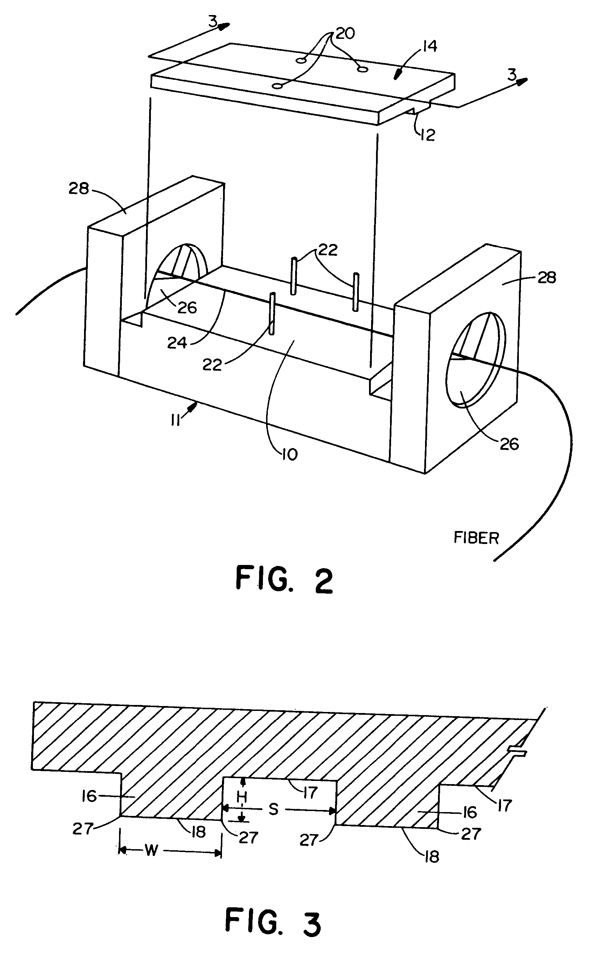

Coherent power transfer between the two sets of modes, $LP_{01}$ and $LP_{11}$ sets in nonbirefringent fiber can be achieved by producing periodic coupling between the modes that matches the beat length of the modes. Such coupling can be implemented by periodically deforming the fiber with the device shown in Figure 2.

### Structural Features of the Coupler

Figure 2 shows the coupler of the present invention in perspective view. A polished, flat surface 10 is machined on a metal or plastic block 11. The surface 10 should be smooth and flat to within a few microns. An optical fiber is disposed between the surface 10 and the undersurface of a second block 14, which has a multiple ridge region 12, machined thereon. The ridge region 12 provides a series of ridge-shaped coupling elements, which, when pressed against the fiber so as to squeeze the fiber between the blocks 11, 14, stress the fiber at periodic intervals to cause light to be coupled between the modes.

Referring briefly to Figure 3, there is shown a cross section of the ridged region 12 in which a plurality of ridges 16 are formed. The ridges 16 are formed by machining the block 14 to provide spaced parallel notches or grooves 17, such that there is formed a plurality of polished ridge surfaces 18, each having a width, W, and providing a separation, S, between the edges of adjacent ridges. In the embodiment shown, the width, W, and separation, S, are each one-half beat length of the fiber for light at the particular frequency which is utilized. In theory, the width W of each ridge 16 can be any odd multiple of one-half beat length, and the separation S between adjacent ridges can be any odd multiple of one-half beat length.

The cross section of the notches 17 in the preferred embodiment is rectangular, since that is the easiest shape to machine. However, this shape is not critical; any shape that yields a flat surface 18 on the ridges 16 will be satisfactory, provided the height, H, of the notch 17 is sufficient to maintain stress when the material of the ridge 16 is deformed by application of force to the fiber. In a preferred embodiment, the block 14 is made of a hard plastic, such as Deltrin™. This plastic deforms more readily than glass, and thus avoids damage to the fiber when stressing the fiber. For complete power transfer, it is important that the ridges apply stress to the fiber so as to provide alternate regions of deformation and no deformation in the fiber. The overall length of the device is not critical; however, in the embodiment shown, the length is on the order of two to three inches (1 inche = 2,54 cm). Further, it has been found that when nonbirefringent fiber is used, a force of about 3 kg applied to the block 14 is required to achieve maximum coupling, regardless of the number of ridges 16.

Returning to Figure 2, the block 14 has a plurality of holes 20 spaced in a pattern to receive a set of pins 22 projecting from the flat surface 10 in a matching pattern. The block 14 may be slid toward and away from the flat surface 10 along the pins 22. The pins 22 are so aligned and the ridges 16 are oriented such that the edges of the ridges 16 are transverse to the longitudinal axis of a fiber 24, which is held on the flat surface 10 by a pair of fiber holding plates 26. Thus, the edges of the ridges 16, illustrated by the reference numeral 27 in Figure 3, are transverse to the longitudinal axis of the fiber 24. The pins 22 also serve to prevent rocking of the block 14 to prevent uneven pressure from being applied to the fiber 24.

If desired, the ends of the pins 22 may be threaded for receiving respective nuts (not shown), and respective coil springs (not shown) may be placed between the nuts and the upper block 14 in order to control the pressure exerted by the top plate 14 on the fiber 24.

The holding plates 26 are disk-shaped with a V-shaped cutout therein for receiving the fiber, and are mounted in respective circular apertures of respective end plates 28, which are mounted at the ends of the block 11 so that they are perpendicular to the flat surface 10. However, any other suitable method of holding the fiber may be used alternatively.

## Determining the Fiber Beat Length

To properly size and space the ridges 16, the beat length of the fiber 24 must be known. For birefringent monomode fiber, the beat length may be directly observed, as is known in the art.. However, the beat length of nonbirefringent fiber cannot be directly observed, and a more elaborate procedure is necessary. A method of determining the beat length of a nonbirefringent fiber will now be described.

A particular nonbirefringent fiber used as the fiber 24 in testing was a single length of Corning single mode fiber, having an outer diameter of approximately 125 $\mu$, a cutoff wavelength of approximately 650 nm, a mean index for the core and the cladding of 1.458, a step index profile with a core index of 1.4593, a cladding index of 1.4567, and a core- radius of 2.9 $\mu$. Vertically polarized light was input to the fiber by offsetting the input beam relative to the central axis of the fiber such that approximately equal amounts of the vertically polarized fundamental $LP_{01}$ mode and the vertical-normal $LP_{11}$ mode (See Figure 1) were launched. A continuous wave dye laser was used so that the input wavelength could be varied.

The fiber output was displayed on a screen and the interference pattern between the two guide modes was observed. As the input wavelength was scanned from 570 nm to 610 nm the output pattern fluctuated periodically (i.e. repeated itself) 40 times. Those skilled in the art will understand that, from this data, the difference between the refractive indices of the two sets of modes (i.e. the first and second order sets of modes) may be calculated using the simplified Eigen value equations for a cylindrical step index fiber, as discussed in Chapter 8 of Light Transmission Optics, Dietrich Marcuse, 2nd edition, Van Nostrand Reinhold Co., 1982 (See especially Section 8.6).

For the above-described fiber, a value for the refractive index difference $\Delta n$ was calculated to be 0.001342, yielding a beat length, calculated in accordance with equation (2), above, of 0.447 mm for a wavelength of 600 nm.

For testing with this nonbirefringent fiber, the preferred embodiment of the coupler of the invention was constructed as a thirty ridge structure with 0.203 mm wide gaps/between ridges 16, and 0.229 mm wide ridges, yielding a ridge periodicity of .432 mm. The gaps and ridges were not equal in length due to fabrication limitations. The wavelength required for a beat length of 0.432 mm (equal to the ridge periodicity) was calculated to be 608 nm.

## Theory of Operation for Nonbirefringent Fiber

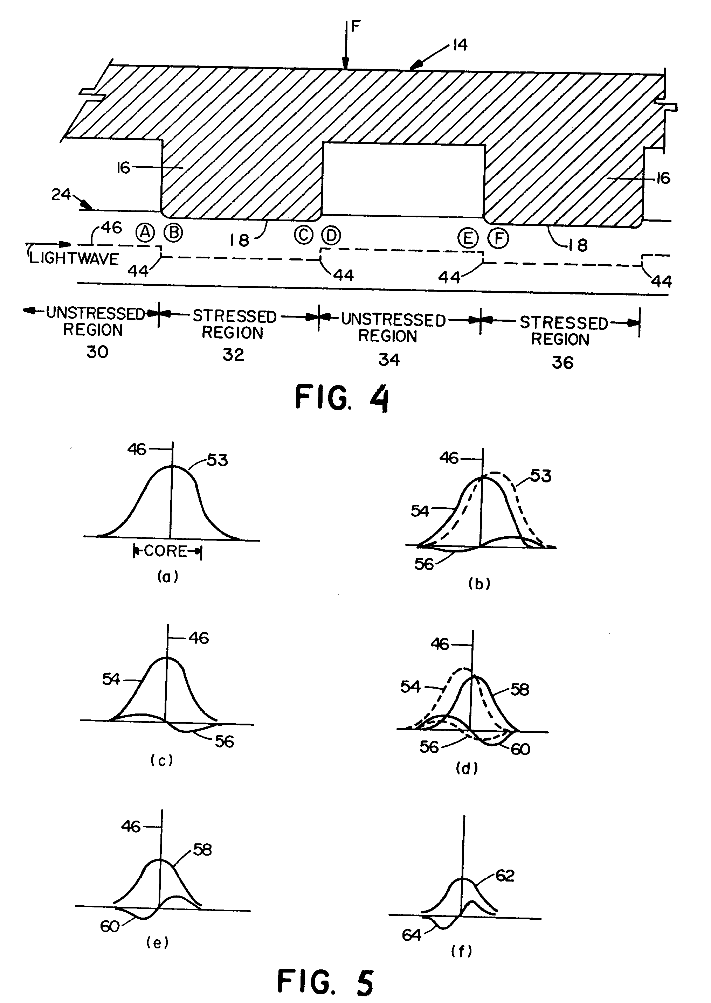

Referring to Figure 4, a modal coupler incorporating a nonbirefringent fiber 24 is shown. A force F is applied to the upper block 14, which causes the coupling surfaces 18 of the ridges 16 to press against the fiber 24 and asymmetrically deform the fiber. The ridges 16 cause abrupt changes in fiber geometry at the beginning and end of each stressed region 32, 36, thus creating boundaries 44 between the stressed and unstressed regions.

For the nonbirefringent fiber 24, the center line or longitudinal axis 46 of the fiber is abruptly shifted at each boundary 44 in the direction of the applied force. Such abrupt shifting of the fiber axis 46 causes light to be coupled from the fundamental $LP_{01}$ set of modes to the second order $LP_{11}$ set of modes at each of the boundaries 44. The particular second order mode to which the light is coupled depends upon the direction of force relative to the polarization of the applied light. For example, if the input light in the fundamental is vertically polarized, such light will uniquely couple to the vertical-perpendicular second order mode, and not to the vertical parallel second order mode, the horizontal-normal second order mode, or the horizontal parallel second order mode (see Figure 1). Assuming now that the force is still vertical, but the input light is horizontally polarized in the fundamental mode, such light will couple uniquely to the horizontal parallel second order mode and not to any of the other second order modes.

## Modal Coupling in a Nonbirefringent Fiber

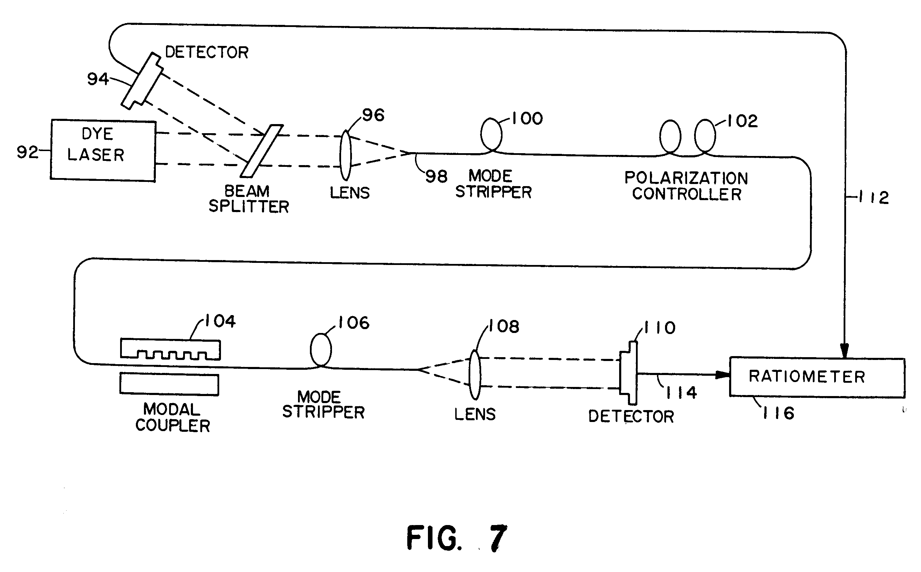

To more fully illustrate the manner in which light is coupled to the second order set of modes at each of the boundaries 44 in a nonbirefringent fiber 24, the electric field distribution of a lightwave will be traced as it propagates through the fiber 24, from the left side to the right side, as viewed in Figure 7. It will be assumed that the lightwave is vertically polarized and launched in the fundamental mode.

As shown in Figure 5(a), just before the lightwave arrives at the first boundary 44, e.g. when it is at the location A in Figure 4, the electric field distribution, illustrated by the curve labeled 53, will be symmetric about the fiber axis or center line 46, and well confined to the fiber core.

As the lightwave crosses the first boundary 44, to the location B in Figure 4, the electric field distribution shown by the curve 53 will appear the same, relative to a fixed observer, since the electric field is continuous across the boundary 44, in accordance with Maxwell's equations. However, the fiber axis 46 is now shifted due to the deformation of the fiber 24 caused by the ridges 16, so that the curve 53 is no longer symmetrical about the axis 46, as shown in Figure 5(b). The curve 53, shown in dotted lines in Figure 5(b), thus decomposes back into two normal modes, namely a fundamental mode, illustrated by the curve 54, and a small second order mode, illustrated by the curve 56. In other words, the nonsymmetric curve 53 is the sum of the first and second order normal mode curves 54, 56, respectively. Thus, at the first boundary 44, the decomposition of the curve 53 causes a small amount of fundamental mode light to be transferred to the second order mode.

Since the ridge 16 is one-half beat length long, as the light propagates from location B to location C in Figure 4, the light in the second order mode will undergo a phase shift of 180° relative to the light in the first order or fundamental mode. Accordingly, at the point C in Figure 4, the electric field distributions shown by the curves 54 and 56 will be the same, except that they are 180° out of phase, as illustrated in Figure 5 (c). When the lightwave crosses the second boundary 44, and arrives at the point D in Figure 4, the axis 46 of the fiber shifts back to an unstressed, undeformed condition, and the modes 54, 56 are again nonsymmetrical with regard to the axis 46. Consequently, the light in the fundamental mode 54 again decomposes into a fundamental mode 58 of lesser amplitude than the mode 54, and a second order mode which is in phase with the second order mode 56, thereby yielding a resultant second order mode 60, as shown in Figure 5(d), which has an increased amplitude relative to the mode curve 56. It will be recognized that the 180° phase change between the modes during propagation from point B to point C advantageously causes the light coupled from the fundamental to the second order mode to add to that previously coupled, such that the second order mode coupling is cumulative, rather than destructive.

As the light propagates from point D to point E, the first and second order modes undergo another 180° phase change, such that when the light reaches point E in Figure 4, the electric field distribution is as shown in Figure 5(e). At the third boundary 44, the fiber axis 46 again shifts, and the same process repeats, so as to cause light from the fundamental mode to be coupled to the second order mode, as illustrated by the curves 62, 64 in Figure 5(f). Thus, it may be seen from the foregoing that the abrupt boundaries 44 provide coupling locations at which a fraction of energy from the fundamental mode is coupled to the second order mode.

## Performance of the Modal Coupler

From the above discussion, it is seen that each boundary 44 at an odd multiple of one-half beat length along the fiber 24 causes a certain amount of power to be coupled from one mode to the other. The power coupled at the boundaries 44 is additive, so that total amount of coupled power from one end of the fiber 24 to the other is cumulative. If the boundaries were other than at exact odd multiples of one-half beat length, the cumulative coupled power might still be non zero, but each boundary at other than an odd multiple might cause power to be coupled into the other mode which has a component which is out of phase with the power already coupled into the other mode. This out of phase coupled power would cancel some of the power already coupled. Whether the net coupled power was non zero would depend upon the exact locations of the boundaries and how much force was applied in each stressed region. In general, however, errors of e.g. on the order of 5-10% in the location of the boundaries may be tolerated without having a substantial adverse effect on the operation of the invention.

The preferred embodiment of the modal coupler of the invention was tested using both birefringent and nonbirefringent fiber. In the device depicted in Figure 2, the fiber jacket was removed from the fiber 24 to expose the fiber directly to the ridges. This may not be necessary in all cases.

## Testing With Nonbirefringent Fiber

When using nonbirefringent fiber, test results show that the coupler of the present invention exhibits surprising anomalous behavior when compared to conventional coupled mode theory. For example, conventional coupled mode theory predicts that the coupler should be wavelength dependent. However, the test results show that the coupling is substantially independent of the wavelength of the light over a broad range.

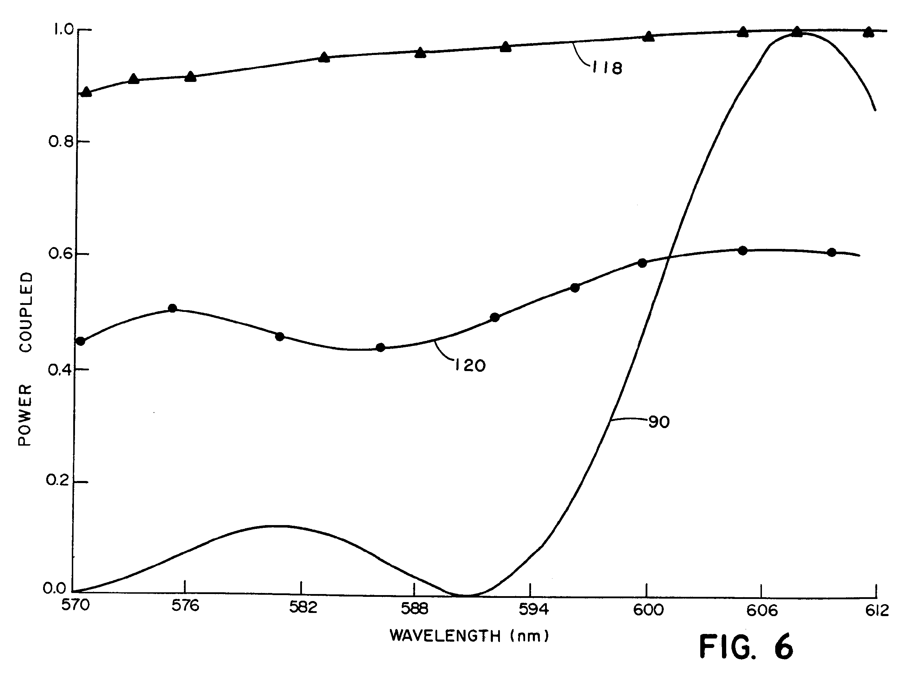

From the analysis above in relation to coupling between modes in nonbirefringent fiber, one would expect the performance of the coupler to be dramatically reduced when the spacing between the beginning of one ridge and the beginning of the next ridge 16 is not one beat length (or an integer multiple thereof). Calculations show that, in theory, the performance of the coupler of the present invention used with nonbirefringent fiber should generally follow the curve 90 of Figure 6. For the preferred embodiment, maximum coupling was expected to occur at a wavelength of 608 nm, which yields a beat length equal to the ridge periodicity of 0.432 mm. At wavelengths above or below 608 nm, the curve 90 predicts that the coupling should rapidly decrease.

The performance of the thirty ridge coupler of the preferred embodiment was tested with nonbirefringent fiber utilizing the circuit arrangement shown in Figure 7. A frequency tunable dye laser 92 was used to produce the source light. This source light was impressed upon a beam splitter where approximately one-half of the light was directed to a detector 94, while the other one-half was impressed upon a lens 96, which focused the light for introduction into a nonbirefringent optical fiber 98. The dye laser 92 was operated in a wavelength range below cutoff such that only the first and second order modes were launched in the fiber 98.

The fiber 98 was wrapped around a 1.3 centimeter diameter post at the input end to provide a mode stripper 100 for stripping out any second order modes that were launched. This type of mode stripper is well known in the art, and is discussed in an article by Y. Katsuyama, entitled "Single Mode Propagation in a Two Mode Region of Optical Fiber by Using Mode Filter", Electronics Letters, 15, 442 (1979). An all fiber polarization controller 102 was formed in the fiber 98 after the mode stripper 100. A polarization controller of this type is disclosed in U.S. Patent No. 4,389,090, issued June 21, 1983. The purpose of the polarization controller 102 was to vary the polarization of the guided input light such that it is e.g. linear vertical. The fiber 98 then passed through a ridge structure such as that described in reference to Figures 2 and 3 to form the thirty ridge modal coupler 104 of the preferred embodiment. The fiber was then wrapped around another post to form a second mode stripper 106, identical to the first mode stripper 100. At the output end of the fiber, the output light is directed against a collimating lens 108, which impresses the output light upon a detector 110. The two detectors 94, 110 are then connected by lines 112, 114, respectively, to a ratiometer 116. This ratiometer 116 displays, as an output, the ratio of the output light intensity, as measured by the detector 110, to the input light intensity, as measured by the detector 94.

In operation, the light input at the input end of the fiber 98 is first stripped of second order modes by the mode stripper 100, so that when the light enters the polarization controller, only the fundamental mode is present. The polarization controller is then used to adjust the polarization of the input light so that it is e.g. vertically linearly polarized upon entering the modal coupler 104. The coupler 104 is operated by applying a force to the upper ridged plate, as discussed above, to cause coupling of light from the fundamental mode to the second order mode. After leaving the coupler 104 the light is stripped of second order modes by the mode stripper 106, and any residual light in the fundamental mode is impressed upon the detector 110 through the lens 108.

For testing, the wavelength of the input light was varied from 570 nm to 612 nm to determine the sensitivity of the coupler 104 to variations in wavelength. As expected, maximum coupling occurred at a wavelength of 608 nm. Measurements indicated that the coupling of the vertically polarized fundamental mode to the second order mode (i.e. the vertical-perpendicular second order mode) was quite good, and that less than -40 dB of residual power was left in the fundamental mode at the output end of the fiber 98, which corresponds to 99.99% of the power being coupled from the fundamental to the second order mode. Insertion loss was measured by removing the output mode stripper 106 and measuring the total power in the fiber while the coupler was operating. By comparing this value to the power in the fiber when the coupler was not operating, a loss of 9% was measured.

When the wavelength of the source light was varied from 608 nm, however, the coupler 104 exhibited unexpected behavior. Specifically, the coupling of the vertically polarized light remained at a high level throughout the wavelength range from 570 to 612 nm, as illustrated by the curve 118 in Figure 6 and thus, the coupling did not follow the theoretical curve 90. The triangles on the curve 118 indicate actual data points.

The tests described above in reference to Figure 6 were repeated, this time for linearly horizontally polarized input light. As indicated by the curve 120 of Figure 6 coupling of the horizontal polarization was relatively constant over the wavelength range, and peaked at 608 nm. Dots on the curve 120 represent actual data points. Thus, the coupling curves 118, 120 for vertically and horizontally polarized light, respectively, were both broad and did not follow the predicted coupled mode theory curve 90. It is significant, however, that the curve 120 for horizontally polarized light exhibits further anomalous behavior in that the amount of coupling is much less than for vertically polarized light, being on the order of only 4 dB. For both the curves 118 and 120, a vertical force was applied to the coupler 104 to cause coupling from the fundamental to the higher order modes.

Thus, the coupler of the present invention exhibits anomalous behavior when used with nonbirefringent fiber, when compared to conventional coupled mode theory, in that (1) the coupling is relatively constant for different wavelengths, and (2) such coupling is polarization dependent. Interestingly, the polarization dependence of the coupler also appears to be related to the number of ridges 16 (Figure 3). For example, when a ten ridge device is used, the discrepancy between the coupling of the two polarizations diminishes, and both polarizations couple on the order of 99% of their power into the second order mode. For an eighty ridge device, neither polarization couples better than 20% of its power. The reasons for this surprising behavior of the coupler are not fully understood. It is theorized that the coupler does not follow conventional mode theory for two reasons: (1) because the $LP_{11}$ modes only approximate the true normal modes of the fiber, and (2) because the normally nonbirefringent fiber becomes birefringent when squeezed by the ridges 16 (Figure 3).

## Use of the Coupler as a Fiber Polarizer

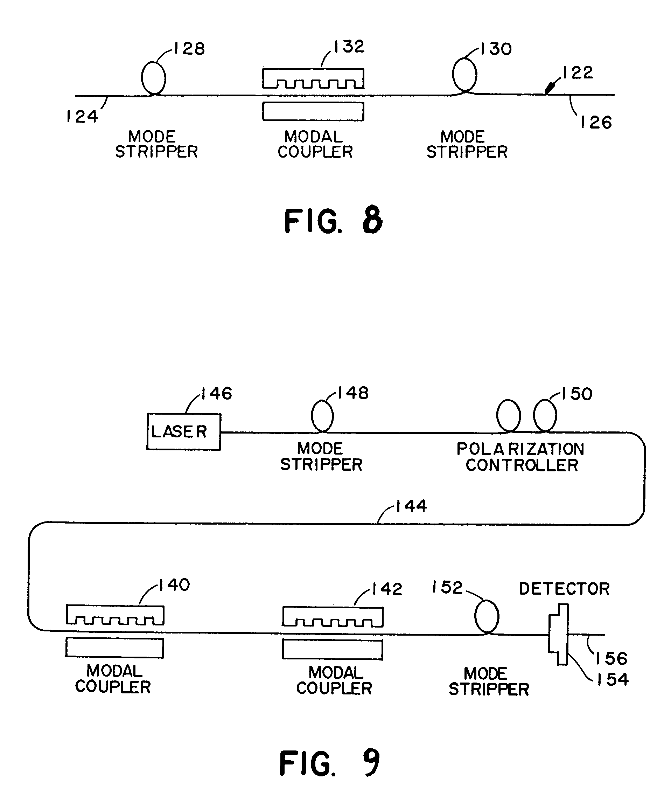

The above-described polarization dependence of the coupler when used with nonbirefringent fiber may advantageously be used to provide an in-line all fiber bidirectional polarizer. As shown in Figure 8, such a polarizer may comprise a single continuous strand of fiber 122 having end portions 124, 126. Mode strippers 128, 130 are located at the end portions 124, 126, respectively, and a modal coupler 132, such as the thirty ridge coupler of the preferred embodiment, is interposed between the mode strippers 128, 130. Preferably, the number of ridges 16 on the modal coupler 132 is selected to maximize coupling in one polarization, (e.g. the vertical polarization) and minimize coupling of the orthogonal polarization (e.g. the horizontal polarization). As discussed previously in reference to Figures 6 and 7, using the thirty ridge device, 40 dB coupling of the vertically polarized fundamental mode to the higher order mode was achieved, while only 4 db of the horizontally polarized fundamental mode was coupled to the higher order mode. Consequently, such a modal coupler yields a 36 dB extinction ratio between the vertical and horizontal polarizations in the fundamental modes. In operation, light is input to one end portion of the fiber 122, e.g. the end portion 124. Second order modes are stripped by the mode stripper 128 so that only the fundamental mode enters the modal coupler 132. It will be assumed that vertical polarizations are well coupled, while horizontal polarizations are poorly coupled. Thus, if the light input to the coupler 132 is vertically polarized, substantially all of it will be coupled to the second order mode, and such light will be stripped by the mode stripper 130 so that the amount of light reaching the output fiber portion 126 is virtually zero. On the other hand, if the polarization of the input light entering the coupler 132 is horizontal, only a fraction of the light will be coupled to the second order mode and stripped by the mode stripper 130. Thus, much of the light will remain in the fundamental mode and propagate to the output end portion 126 of the fiber 122. Thus, input light which is horizontally polarized is passed by the coupler and mode stripper, while vertically polarized light is effectively blocked with nonbirefringent fiber. As indicated above, with a thirty ridge device, a 36 db extinction ratio between the vertical and horizontal polarizations in the fundamental modes may be expected, yielding an all-fiber polarizer with performance comparable to that of thin polarizing films.

Use of the Coupler as a Mach-Zehnder Interferometer

As shown in Figure 9, a Mach-Zehnder interferometer may be constructed by mounting two modal couplers 140, 142 in spaced relationship along a single continuous strand of nonbirefringent optical fiber 144. Source light is produced by a laser 146, which is optically coupled to introduce light into the input end of the fiber 144. The source light from the laser 146 is first passed through a mode stripper 148, formed on the fiber 144, to remove second order modes. The light is then passed through a polarization controller 150, which is used to adjust the polarization of the light to, e.g., linear-vertical. The guided source lightwave then enters the first coupler 140, which is set to approximately 50/50 coupling, such that half of the power is coupled to the second order mode.

After propagating a distance through the fiber 144, the light then enters the second coupler 142. The light exiting the second coupler 142 passes through a mode stripper 152, formed on the fiber 144, to strip second order modes. The light then exits the fiber 144 and is impressed upon a detector 154, which outputs an electrical signal on a line 156.

In the embodiment shown, the length of fiber between the modal couplers 140, 142 and the wavelength of the source light are selected such that, at the input end of the second coupler 142, there is zero phase difference between the light in the first order and second order modes. It will be recognized that if the phase difference between the modes is zero upon entering the coupler 142, the coupling to the second order mode will be at a maximum, while if the first and second order modes are 180° out of phase, the coupling by the coupler 142 will be at a minimum. Accordingly, with zero phase difference at the input end of the coupler 142, maximum coupling to the second order mode will occur. The second order mode is then stripped by the mode stripper 152, and the signal at the detector, i.e. the residual fundamental mode power, will be at a minimum. The amount of coupling of the coupler 142 may be varied until a minimum in the residual fundamental power is observed. The coupling is then fixed at this value and the portion of fiber between the couplers 140, 142 is exposed e.g. to an environmental quantity to be measured, such as temperature.

Exposure to temperature will change the length of the fiber between the couplers 140, 142, and thus, cause the light in the first and second order modes to move out of phase upon entering the coupler 142. This will cause the coupling to the second order mode to decrease, and thus, the residual power in the fundamental mode, as measured by the detector, will increase. The output signal on the line 156 from the detector 154, therefore, provides a direct indication of the magnitude of the sensed environmental quantity. In one experiment, a dynamic range of the power in the fundamental mode of 30 dB was measured as the fiber was thermally expanded. This demonstrates that the device couples coherently and can be used in interferometric systems.

Conclusion

Thus, the modal coupler of the present invention has a variety of uses, e.g. as a single fiber polarizer, and as a single fiber Mach-Zehnder interferometer.

Additionally, the coupler may be used in a two channel data system. These uses are exemplary only, and other uses will be apparent to those skilled in the art.

Although the invention has been described in terms of the preferred embodiment, many variations will be apparent to those skilled in the art. All such variations using the same principle are intended to be included within the appended claims.

## Claims

1. A directional coupler comprising:

an optical fiber (24);

a light source (66) for introducing a lightwave into the optical fiber (24);

a support structure (10) for supporting one side of the optical fiber (24); and

a structure (14) comprising a plurality of surfaces (18) spaced at intervals along the optical fiber (24), said structure squeezing the optical fiber (24) between the surfaces (18) and the support structure (10) so as to provide a series of alternating stressed and unstressed regions (32,34,36) along the optical fiber (24);

the coupler being characterised in that the optical fiber (24) is a substantially nonbirefringent fiber and the lightwave has a wavelength shorter than the cutoff wavelength of the fiber (24) so that the lightwave is capable of propagating through the fiber (24) only in the fundamental ($LP_{01}$) set of modes and the second order ($LP_{11}$) set of modes of the fiber (24), and in that said intervals along said optical fiber (24) are substantially equal to the beat length of the fiber (24) for the fundamental and second order modes, or a multiple integer thereof, so that light launched in the fundamental set of modes would be coupled progressively into the second order set of modes at each boundary between a stressed region and an unstressed region.

2. The directional coupler defined in Claim 1, wherein each of the surfaces (18) has substantially abrupt edges to provide an abrupt shift in the longitudinal axis of the fiber (24).

3. The directional coupler defined in Claim 1 or 2, wherein the width (W) of each surface (18) in the direction of the fiber axis is approximately equal to an odd multiple of one half the fiber beat length and the spacing (S) between adjacent surfaces (18) in the direction of the fiber axis is approximately equal to an odd multiple of one half the fiber beat length.

4. The directional coupler defined in any one of Claims 1 to 3, wherein the surfaces (18) are on a ridged block (14), and the support structure comprises a flat plate (10).

5. The directional coupler defined in Claim 4, wherein the coupler is further characterised by a plurality of pins (22) projecting from the support structure (10), and a plurality of holes (20) in the ridged block (14), wherein the holes (20) and the pins (22) are correspondingly arranged so each of the pins is aligned with and fits into one of the holes, so the ridged block (14) can be slid toward and away from the flat plate (10) on the pins.

6. The coupler defined in any one of Claims 1 to 5, further characterised by a modulating driver (158) for oscillating the surfaces (18) relative to the support structure (10) in accordance with a modulating signal to vary the stress applied to the fiber (24) in the stressed regions (32,36).

7. The coupler defined in any one of Claims 1-6, further characterised in that the number of stressed regions is selected to cause preferential coupling of one polarisation relative to another polarisation.

8. A method of coupling light between guided modes of an optical fiber (24) comprising the steps of introducing light into the optical fiber (24) and stressing the optical fiber (24) at intervals along the optical fiber (24) so as to provide a series of alternating stressed and unstressed regions (32,34,36) along the optical fiber (24), said method being characterised by the steps of:

selecting a substantially nonbirefringent fiber (24) and a wavelength shorter than the cutoff wavelength of the fiber (24) so that the lightwave propagates through the fiber (24) only in the fundamental ($LP_{01}$) set of modes and the second order ($LP_{11}$) set of modes of the fiber (24); and

selecting said intervals so that they are substantially equal to the beat length of the fiber (24) for the fundamental and second order modes, or a multiple integer thereof, the selection being such that light introduced into the fiber in the fundamental set of modes would be coupled progressively into the second order set of modes at each boundary between a stressed region and an unstressed region.

## Patentansprüche

1. Richtungskoppler mit:
einer optischen Faser (24);

einer Lichtquelle (66) zum Einspeisen einer Lichtwelle in die optische Faser (24);

einer Stützstruktur (10) zum Stützen einer Seite der optischen Faser (24) und

einer Struktur (14) mit mehreren Flächen (18), die mit Zwischenräumen längs der optischen Faser (24) voneinander beabstandet sind, wobei die Struktur zwischen den Flächen (18) und der Stützstruktur (10) derart auf die optische Faser (24) drückt, daß eine Reihe von abwechselnd beanspruchten und nicht beanspruchten Bereichen (32, 34, 36) längs der optischen Faser (24) entsteht,

dadurch gekennzeichnet, daß die optische Faser (24) eine im wesentlichen nicht doppelbrechende Faser ist und die Lichtwelle eine Wellenlänge aufweist, die kürzer als die kritische Wellenlänge der Faser (24) ist, so daß sich die Lichtwelle nur in den Grundmoden ($LP_{01}$) und in den Moden zweiter Ordnung ($LP_{11}$) der Faser (24) ausbreiten kann, und daß die Zwischenräume längs der optischen Faser (24) für die Grundmoden und Moden zweiter Ordnung im wesentlichen gleich der Schwebungslänge der Faser (24) oder einem ganzzahligen Vielfachen davon sind, so daß in die Grundmoden eingespeistes Licht an jeder Grenze zwischen einem beanspruchten Bereich und einem nicht beanspruchten Bereich nach und nach in die Moden zweiter Ordnung gekoppelt wird.

2. Richtungskoppler nach Anspruch 1, bei dem jede Fläche (18) im wesentlichen steile Kanten aufweist, um eine schlagartige Verschiebung in der Längsachse der Faser (24) hervorzurufen.

3. Richtungskoppler nach Anspruch 1 oder 2, bei dem die Breite (W) jeder Fläche (18) in der Richtung der Faserachse ungefähr gleich einem ungeradzahligen Vielfachen der halben Faserschwebungslänge und der Abstand (S) zwischen benachbarten Flächen (18) in der Richtung der Faserachse ungefähr gleich einem ungeradzahligen Vielfachen der halben Faserschwebungslänge ist.

4. Richtungskoppler nach einem der Ansprüche 1 bis 3, bei dem die Flächen (18) auf einem gerippten Block (14) angebracht sind und die Stützstruktur eine ebene Platte (10) umfaßt.

5. Richtungskoppler nach Anspruch 4, gekennzeichnet durch mehrere aus der Stützstruktur (10) hervorstehende Stifte (22) und durch mehrere Löcher (20) in dem gerippten Block (14), wobei die Löcher (20) und die Stifte (22) jeweils derart angeordnet sind, daß jeder der Stifte bezüglich eines Loches ausgerichtet ist und dort hineinpaßt, so daß der gerippte Block (14) auf den Stiften gleitend auf die ebene Platte (10) zu- und davon wegbewegt werden kann.

6. Koppler nach einem der Ansprüche 1 bis 5, gekennzeichnet durch einen modulierenden Treiber (158) zum Oszillieren der Flächen (18) bezüglich der Stützstruktur (10) in Abhängigkeit von einem Modulationssignal, um die auf die Faser (24) in den beanspruchten Bereichen (32, 36) ausgeübte Beanspruchung zu variieren.

7. Koppler nach einem der Ansprüche 1 bis 6, dadurch gekennzeichnet, daß die Anzahl von beanspruchten Bereichen so gewählt ist, daß eine Polarisation gegenüber einer anderen Polarisation bevorzugt gekoppelt wird.

8. Verfahren zum Koppeln von Licht zwischen leitenden Moden einer optischen Faser (24), das die Schritte umfaßt, Licht in die optische Faser (24) einzuspeisen und die optische Faser (24) an Zwischenräumen längs der optischen Faser (24) derart zu beanspruchen, daß eine Reihe von abwechselnd beanspruchten und nicht beanspruchten Bereichen (32, 34, 36) längs der optischen Faser (24) hervorgerufen wird, gekennzeichnet durch die Schritte: Auswählen einer im wesentlichen nicht doppelbrechenden Faser (24) und einer Wellenlänge, die kürzer als die kritische Wellenlänge der Faser (24) ist, so daß sich die Lichtwelle durch die Faser (24) nur in den Grundmoden ($LP_{01}$) und den Moden zweiter Ordnung ($LP_{11}$) der Faser (24) ausbreitet, und Auswählen der Zwischenräume derart, daß sie für die Grundmoden und die Moden zweiter Ordnung im wesentlichen gleich der Schwebungslänge der Faser (24) oder einem ganzzahligen Vielfachen davon sind, wobei die Auswahl derart erfolgt, daß in die Grundmoden in die Faser eingespeistes Licht an jedem der Grenzen zwischen einem beanspruchten Bereich und einem nicht beanspruchten Bereich nach und nach in die Moden zweiter Ordnung gekoppelt wird.

**Revendications**

1. Coupleur directionnel comportant :
    une fibre optique (24);
    une source de lumière (66) pour introduire une onde lumineuse dans la fibre optique (24);
    une structure de support (10) pour supporter un côté de la fibre optique (24); et
    une structure (14) comportant une pluralité de surfaces (18) espacées par intervalles le long de la fibre optique (24), ladite structure comprimant le fibre optique (24) entre les surfaces (18) et la structure de support (10) de façon à créer une série de zones chargées et non chargées (32, 34, 36) qui alternent le long de la fibre optique (24);

le coupleur étant caractérisé en ce que la fibre optique (24) est une fibre essentiellement non biréfringente et l'onde lumineuse a une longueur d'onde plus courte que la longueur d'onde critique de la fibre (24), de sorte que l'onde lumineuse est capable de se propager à travers la fibre (24) uniquement dans le jeu de modes fondamentaux ($LP_{01}$) et dans le jeu de modes du second ordre ($LP_{11}$) de la fibre (24), et en ce que lesdits intervalles le long de la fibre optique (24) sont sensiblement égaux à la longueur de battement de la fibre optique (24) pour les modes fondamentaux et du second ordre, ou à un multiple entier de cette longueur, de sorte que la lumière se propageant initialement dans le jeu de modes fondamentaux sera progressivement transférée par couplage au jeu de modes du second ordre à chaque limite entre une zone chargée et une zone non chargée.

2. Coupleur directionnel selon la revendication 1, dans lequel chacune desdites surfaces (18) a des bords sensiblement à angles vifs, pour créer un décalage brusque de l'axe longitudinal de la fibre (24).

3. Coupleur directionnel selon la revendication 1 ou 2, dans lequel la longueur (W) de chacune desdites surfaces (18) dans la direction de l'axe de la fibre est approximativement égale à un multiple impair de la moitié de la longueur de battement de la fibre, et l'écart (S) entre les surfaces adjacentes (18) dans la direction de l'axe de la fibre est approximativement égal à un multiple impair de la moitié de la longueur de battement de la fibre.

4. Coupleur directionnel selon l'une des revendications 1 à 3, dans lequel lesdites surfaces (18) se trouvent sur un bloc nervuré (14) et la structure de support comprend une plaque plate (10).

5. Coupleur directionnel selon la revendication 4, dans lequel le coupleur est caractérisé en outre par une pluralité de tiges (22) proéminentes sur la structure de support (10) et une pluralité de trous (20) dans le bloc nervuré (14), les trous (20) et les tiges (22) étant disposés en correspondance de façon que chacune des tiges soit alignée avec l'un des trous et s'y adapte, de sorte que le bloc nervuré (14) peut se rapprocher et s'éloigner de la plaque plate (10) en coulissant sur les tiges.

6. Coupleur selon l'une des revendications 1 à 5, caractérisé en outre par un circuit d'excitation à modulation (158) pour faire osciller lesdites surfaces (18) par rapport à la structure de support (10) en fonction d'un signal de modulation pour faire varier la charge appliquée à la fibre (24) dans les zones chargées (32, 36).

7. Coupleur selon l'une des revendications 1 à 6, caractérisé en outre en ce que le nombre de zones chargées est choisi de façon à causer un couplage préférentiel d'une polarisation à une autre polarisation .

8. Procédé de couplage de lumière entre des modes guidés d'une fibre optique (24), comportant les étapes d'introduction de lumière dans la fibre optique (24) et de compression de la fibre optique (24) par intervalles le long de la fibre optique (24) de façon à créer une série de zones chargées et non chargées (32, 34, 36) qui alternent le long de la fibre optique (24), le procédé étant caractérisé par les étapes de :

sélection d'une fibre essentiellement biréfringente (24) et sélection d'une longueur d'onde plus courte que la longueur d'onde critique de la fibre (24), de sorte que l'onde lumineuse se propage à travers la fibre (24) uniquement dans le jeu de modes fondamentaux ($LP_{01}$) et dans le jeu de modes du second ordre ($LP_{11}$) de la fibre (24), et

sélection desdits intervalles de façon qu'ils soient sensiblement égaux à la longueur de battement de la fibre (24) pour les modes fondamentaux et du second ordre, ou à un multiple entier de cette longueur, la sélection étant telle que de la lumière introduite dans la fibre dans le jeu de modes fondamentaux sera progressivement transférée par couplage au jeu de modes du second ordre à chaque limite entre une zone chargée et une zone non chargée.

FIG. I

FIG. 2

FIG. 3

13

F

14

16

24

46 Ⓐ Ⓑ

LIGHTWAVE

44

18 Ⓒ Ⓓ

Ⓔ Ⓕ

16

18

44 44 44

←─UNSTRESSED─→|←─ STRESSED ─→|←─UNSTRESSED─→|←─ STRESSED ─→
REGION | REGION | REGION | REGION
30 | 32 | 34 | 36

# FIG. 4

46 ─53

|←CORE→|

(a)

46 53
54
56

(b)

54 46
56

(c)

46
54 58
56 60

(d)

46 58
60

(e)

62
64

(f)

# FIG. 5

14

FIG. 6

FIG. 7

FIG. 8

FIG. 9